(19) Europäisches Patentamt
European Patent Office
Office européen des brevets

(11) **EP 4 202 801 A1**

(12) **EUROPEAN PATENT APPLICATION**

(43) Date of publication:
**28.06.2023   Bulletin 2023/26**

(21) Application number: **21383216.5**

(22) Date of filing: **24.12.2021**

(51) International Patent Classification (IPC):
***G06N 20/00*** (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Asociación BCAM-Basque Center for Applied Mathematics**
**48009 Bilbao (BIZKAIA) (ES)**

(72) Inventors:
• **MAZUELAS FRANCO, Santiago**
  **48009 Bilbao (ES)**
• **ÁLVAREZ CASTRO, Verónica**
  **48009 Bilbao (ES)**
• **LOZANO ALONSO, José Antonio**
  **48009 Bilbao (ES)**

(74) Representative: **Cueto, Sénida**
**SP3 Patents S.L.**
**Los Madroños, 23**
**28891 Velilla de San Antonio (ES)**

(54) **PREDICTIVE METHOD FOR ENERGY MANAGEMENT**

(57)     The invention provides a predictive method for energy management that adapts to multivariate changes of data characteristics over time, accounting for the fact that different data characteristics can change in a different manner. The method provides a proper adaptation to the changes of the different characteristics by estimating the evolution of each characteristic over time. Obtained predictors can be used to properly forecast the value of energy-related variables and take energy-related decisions. The invention provides accurate predictions that result in enhanced energy management.

FIG. 1

EP 4 202 801 A1

## Description

## Technical field

The invention relates to a predictive method for energy management with a proper adaptation to changes of data characteristics over time.

## State of the art

Predictive methods, such as those related to energy management are known in the State of the Art. An example of these methods is described in the patent publication US6577962B1, disclosing a system and a method for forecasting energy usage load for a facility, in a real-time adaptive manner. For this purpose, the solution proposes a forecasting application comprising a load prediction module for generating energy usage load forecast. The system uses a first set of matrices for storing periodic energy usage load parameter information, and a second set of matrices associated with the load prediction module for storing energy usage prediction information.

Another example is the publication "Analyzing concept drift and shift from sample data"; Geoffrey I. Webb, Loong Kuan Lee, Bart Goethals, François. Petitjean; Data Mining and Knowledge Discovery, September 2018. The publication explains that the concept drift and shift are major issues that greatly affect the accuracy and reliability of many real-world applications of machine learning, proposing a new data mining task, based on the analysis of instances of concept drift or shift and focusing on quantitative descriptions of drift and shift in marginal distributions. The predictive method is applicable in energy-pricing, vegetation monitoring and airline scheduling.

The characteristics of sequential data often change with time in practical scenarios. Time changes are common in multiple applications such as electricity price prediction. For instance, the characteristics related to electricity demand, generation, and price often change with time due to varying habits and weather. For example, an increase in population would lead to a sudden change in the characteristics related jointly to generation and price, while other characteristics related to weather information would not be affected.

As an example of such situations, we can consider a scenario in which at a certain time period T1 values of power generation data around 10MW are frequently followed by a price decrease. At a time period T2, the scenario has an increase in population, then power generation data around 10MW becomes frequently followed by a price increase. On the other hand, the characteristics related jointly to weather and price does not change from time T1 to T2, high temperature values continue to be frequently followed by a price increase. In such scenario, a prediction method that does not account for the change in data characteristics from time T1 to time T2 will incorrectly predict at time T2 a price decrease when the power generation is 10MW. Similarly, a prediction method that adapts to time changes but does not account for situations in which different characteristics change in a different manner will achieve poor prediction performance.

Time changes are present in other applications such as spam mail filtering or credit card fraud detection. Examples of these applications are disclosed in the following publications: "A case-based technique for tracking concept drift in spam filtering", Knowledge-Based Systems, Sarah Jane Delany, Pádraig Cunningham, Alexey Tsymbal, and Lorcan Coyle, 2005; or " Mining concept-drifting data streams using ensemble classifiers", Proceedings of the ninth ACM SIGKDD International Conference on Knowledge Discovery and Data Mining, 2003.

Conventional known methods for energy management adapt to time changes of data, such as data relating to energy prices, consumption, weather or calendar information. Said adaptation is implemented by accounting for a global rate of change of data. These conventional techniques may adapt for a time-varying rate of change by using varying learning rates or weight factors. However, time changes in common practical scenarios cannot be grasped considering only a global rate of change, e.g., different data characteristics often change in a different manner.

It is the objective of the invention to provide a predictive method for energy management that properly adapts to multivariate changes of data characteristics over time. The invention can obtain improved predictions that result in enhanced energy management.

## Brief description of the invention

The invention relates to a predictive method for energy management. The method uses energy-related data to estimate multiple characteristics of the energy-related data at different times, wherein different characteristics of the energy-related data change in a different manner. The method further comprises obtaining predictors at different times by using the estimated characteristics of energy-related data. The method has the particularity of adapting to the changes of the different characteristics by estimating the evolution of each characteristic over time. According to the method of the invention, the obtained predictors are used to forecast the value of energy-related variables and the predicted energy-related variables are used to take energy-related decisions.

By accounting for the fact that different data characteristics can change in a different manner, the method according to the invention provides a better adaptation to sequential data with characteristics that change over time, thus improving the precision of the obtained predictors. The method proposed by the invention involves different behaviour in situations where different groups of characteristics change in a different manner.

The higher accuracy of the predictions provided by the invention involves several advantages regarding a better energy management. In particular, the method of the invention makes it possible to improve tasks such as scheduling generation capacity, planning energy supply and demand and minimizing energy costs. Additionally, using accurate predictions has a positive impact in the environment and the economy by reducing energy waste and the cost of energy transactions. Accurate predictions are even more relevant taking into account the significant increase in the use of intelligent networks.

The energy-related data are obtained at each time t, being the multiple characteristics of energy-related data preferably estimated at time t using the estimated characteristics at the previous iteration t-1 and energy-related data at time t.

According to a preferred embodiment of the method, the estimated characteristics are obtained using models that account for multivariate changes in data characteristics.

According to another embodiment of the invention, the update at time t of each characteristic is carried out accounting for the specific change of that characteristic at time t.

According to another embodiment of the invention, the predictor at time t is obtained from the estimated characteristics at time t.

According to another embodiment of the invention, assessments of the accuracy of the estimates of multiple characteristics are obtained at different times.

According to another embodiment of the invention, multiple characteristics of energy-related data are estimated at time t using the estimated characteristics at time t-1, energy-related data at time t, and assessments of the accuracy of the estimated characteristics at time t-1.

According to another embodiment of the invention, the predictor at time t is obtained from the estimated characteristics at time t together with assessments of the accuracy of the estimated characteristics at time t.

According to another embodiment of the invention, the values of energy-related variables at time t are estimated using the predictor at time t and energy-related data.

According to another embodiment of the invention, the energy-related decisions at time t are made based on the predicted energy-related variables at time t.

The predictive method of the invention can also provide a better adaptation to sequential data with characteristics that change over time, leading to more precise predictions, in other fields such as spam filtering and credit card fraud detection.

Other features and advantages of the invention will become apparent from the following detailed description.

**Brief description of the drawings**

The details of the invention can be seen in the accompanying figure, although this is not intended to be limiting of the scope of the invention:

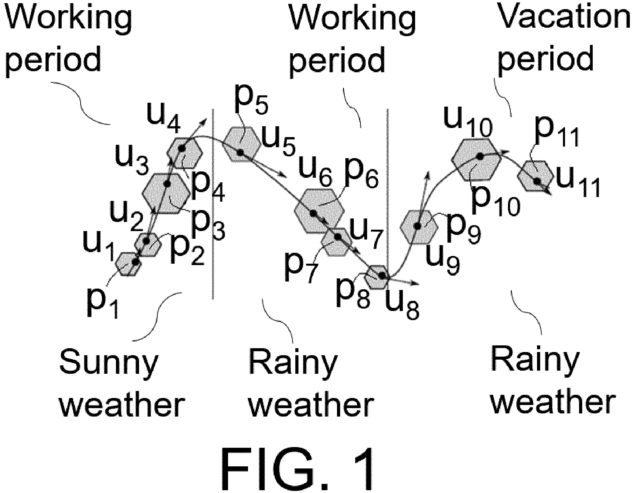

- Figure 1 represents the underlying distribution of the change with time of characteristics of energy-related data, according to a particular embodiment of the invention.

**Detailed description of the invention**

Figure 1 relates to a particular implementation of the predictive method of the invention. Each set of data obtained (e.g. energy prices, consumption, weather or calendar information) is referred to as an instance, while each set of data to be predicted (e.g. price increases, price decreases) is referred to as a label. According to this embodiment, instances are used for predicting labels and classification rules are updated from real labels as new instance-label pairs are obtained. Additionally, labels are assigned to instances for obtaining instance-label pairs $(x_t, y_t)$ over time t, by means of classification rules (predictive rules). As represented in Fig. 1, the instance-label pairs $(x_t, y_t)$ at different times follow different underlying distributions $p_t$. This particular embodiment of the invention includes: modelling at least a mean vector $\tau_t$ representing the characteristics of the underlying distribution $p_t$, wherein each component of the mean vector represents a feature of the instance-label pairs $(x_t, y_t)$, being the mean vector defined in each time by the expectation of a feature map $\Phi$; sequentially estimating each of the components of the mean vector $\tau_t$ independently; determining uncertain sets Ut, from the estimation of the mean vector $\tau_t$, wherein these uncertain sets Ut comprise the time-varying underlying distribution $p_t$ of data with a high probability; and updating classification rules by solving an optimization problem in each instant of time given an uncertain set Ut.

Optionally, sequential techniques proposed for uncertainty sets' tracking are based on Kalman filter recursions for dynamical systems that model multivariate and higher order changes in data characteristics. In addition, sequential techniques for Adaptive Minimax Risk Classifiers AMRCs' learning based on an efficient subgradient method (SM) can be used, using warm starts and maintains local approximations of the objective function.

This embodiment of the invention is applicable to the problem of power energy management. The method can use instances (prices, consumption, previous generations, weather information, calendar information...) to estimate labels (such as variations in the price of energy for the near future). Obtained precise predictions can be used for a better managing, for example related to power purchase decisions. The method of the invention can be combined with known energy management software, such as Energy Management System (EMS), Demand Side Management (DSM) or Demand Side Response (DSR).

Other embodiments of the invention allow more than two labels (multiclass). The nature of the characteristics of the data, as well as the number of characteristics can vary. Other embodiments of the invention are possible, regarding the number of characteristics or labels, since the method represents the instance-label pairs in vector form. The method adjusts to the dimension of the characteristics and the number of labels and independently models each characteristic defining a different dynamic system for each component of the mean vector.

With reference to Figure 1, the fact different characteristics of the data may vary differently are related to different components of a mean vector, allowing each characteristic to be independently modelled. Fig. 1 represents the change with time of underlying distribution $p_t$ of instance-label pairs in adaptive settings; as illustrated, the proposed AMRCs use a sequence of uncertainty sets Ut. These uncertainty sets Ut comprise the underlying distributions $p_t$ with high probability.

Standard methods use instance-label pairs to determine classification rules that assign labels to instances. Both sets of instances X and labels are taken to be finite with $Y = \{1, 2, ..., |Y|\}$'. The set of classification rules can be denoted by T(X, Y), denoting by h(y|x) the probability with which rule $h \in T(X, Y)$ assigns label $y \in Y$ to instance $x \in X$ (h(y|x) $\in \{0, 1\}$ for deterministic classification rules. In addition, $\Delta (X \times Y)$ is denoted as the set of probability distributions on $X \times Y$ and p(x, y) is denoted as the probability assigned by $p \in \Delta (X \times Y)$ to the instance-label pair (x, y). In standard settings, all instance-label pairs are assumed to be samples from the same underlying distribution.

In sequential classification, instance-label pairs arrive over time and classification techniques use each new pair to update classification rules. At each time t, these techniques predict a label $\hat{y}_t$ corresponding with a new instance $x_t$ using the rule $h_t$ at time t, then they obtain updated rule $h_{t+1}$ when the true label $y_t$ is provided.

As shown in Fig. 1, in adaptive settings of this particular embodiment, each instance-label pair $(x_t, y_t)$ is a sample from an underlying distribution $p_t \in \Delta (X \times Y)$ that changes with time (see Fig. 1).

The techniques proposed adapt to time changes by tightly tracking underlying distributions. This tracking is achieved by estimating the evolution over time of the expectation of a feature mapping. At each time t, a mean vector $\tau t = E_{pt} \{\Phi(x, y)\}$ represents the characteristics of the underlying distribution as measured by a feature map $\Phi : X \times Y \to R^m$. Such mappings can be defined as $\Phi(x, y) = (-1)^y \Psi(x)/2$ in binary classification and as $\Phi(x, y) = e_y \otimes \Psi(x)$ in multi-class classification. The map $\Psi$ represents instances as real vectors, for example using random Fourier features (RFF):

$$\Psi(x) = D^{-1/2} [\cos(u_1^T x), \cos(u_2^T x),...,\cos(u_D^T x), \sin(u_1^T x), \sin(u_2^T x), ..., \sin(u_D^T x)]^T$$

for D random Gaussian vectors $u_1, u_2, ..., u_D$.

The proposed AMRCs sequentially learn classification rules by minimizing the worst-case expected loss against uncertainty sets that include the time-varying underlying distribution with high probability, like illustrated in Fig. 1. Such uncertainty sets of distributions are determined for t = 1, 2, ... using estimates of the above described mean vectors as

$$\mathcal{U}_t = \{p \in \Delta(\mathcal{X} \times \mathcal{Y}) : |\mathbb{E}_p\{\Phi(x,y)\} - \hat{\tau}_t| \preceq \lambda_t\} \qquad (1)$$

where

- $| \cdot |$ denotes the vector formed by the absolute value of each component in the argument,
- $\hat{\tau}_t$ denotes the mean vector estimate corresponding with the feature mapping $\Phi$, and
- $\lambda_t \geq 0$ is a confidence vector that accounts for inaccuracies in the mean vector estimation.

Such vector determines the probability with which the underlying distribution belongs to the uncertainty set. For instance, if the mean vector is estimated from n i.i.d. samples and $\Phi$ is bounded by M, using the Hoeffding's inequality we have that

$$\lambda_i = M \sqrt{\frac{2 \log m + 2 \log \frac{2}{\delta}}{n}}, \ \text{for } i = 1, 2, ..., m$$

would ensure the uncertainty set includes the underlying distribution with probability at least 1 - δ.

Classification rules that minimize the worst-case expected loss against the uncertainty set Ut are solutions $h_t$ of the minimax problem

$$\min_{h \in T(\mathcal{X}, \mathcal{Y})} \max_{p \in \mathcal{U}_t} \ell(h, p) \qquad (2)$$

with t (h, p) the expected loss of classification rule h for distribution p. In the following, we utilize the 0-1-loss so that the expected loss with respect to the underlying distribution $\ell$ (h, $p_t$) is the probability of error of classification rule h that we denote as R(h). Then, classification rules solving equation (2) achieve the minimum worst-case probability of error that we denote as R(Ut).

The following theorem shows that a minimax classification rule can be determined at each time t by solving the convex optimization problem:

$$\min_{\boldsymbol{\mu}} 1 - \hat{\boldsymbol{\tau}}_t^{\mathrm{T}} \boldsymbol{\mu} + \varphi(\boldsymbol{\mu}) + \boldsymbol{\lambda}_t^{\mathrm{T}} |\boldsymbol{\mu}| \qquad (3)$$

with

$$\varphi(\boldsymbol{\mu}) = \max_{x \in \mathcal{X}, \mathcal{C} \subseteq \mathcal{Y}} \left( \sum_{y \in \mathcal{C}} \Phi(x, y)^{\mathrm{T}} \boldsymbol{\mu} - 1 \right) / |\mathcal{C}|. \qquad (4)$$

**Theorem** 1. Let $\mu_t$ be a solution of the optimization problem of the equation (3). If a classification rule $h_t$ satisfies, for each x ∈ X , y ∈ Y,

$$h_t(y|x) \geq \Phi(x, y)^{\mathrm{T}} \boldsymbol{\mu}_t - \varphi(\boldsymbol{\mu}_t) \qquad (5)$$

then, $h_t$ is a solution of the minimax equation (2). In addition, the minimum worst-case probability of error over uncertainty set Ut is given by

$$R(\mathcal{U}_t) = 1 - \hat{\boldsymbol{\tau}}_t^{\mathrm{T}} \boldsymbol{\mu}_t + \varphi(\boldsymbol{\mu}_t) + \boldsymbol{\lambda}_t^{\mathrm{T}} |\boldsymbol{\mu}_t|. \qquad (6)$$

The above theorem allows to determine AMRCs' rules ht by sequentially solving the optimization problem of the equation (3). Note that a classification rule satisfying (5) exists because for any x ∈ X

$$\sum_{y \in \mathcal{Y}} \left( \Phi(x, y)^{\mathrm{T}} \boldsymbol{\mu}_t - \varphi(\boldsymbol{\mu}_t) \right)_+ = \max_{\mathcal{C} \subseteq \mathcal{Y}} \sum_{y \in \mathcal{C}} \Phi(x, y)^{\mathrm{T}} \boldsymbol{\mu}_t - \varphi(\boldsymbol{\mu}_t) |\mathcal{C}| \leq 1$$

due to the definition of φ(·) in equation (4). In the prediction stage, the classification rule $h_t$ assigns label y^ ∈ Y to instance x ∈ X with probability

$$h_t(\hat{y}|x) = \begin{cases} \left(\Phi(x,\hat{y})^\mathrm{T}\boldsymbol{\mu}_t - \varphi(\boldsymbol{\mu}_t)\right)_+ /c_x & \text{if} \quad c_x \neq 0 \\ 1/|\mathcal{Y}| & \text{if} \quad c_x = 0 \end{cases} \qquad (7)$$

with (see Alg. 2) $c_x = \Sigma_{y \in} y\,(\Phi(x,y)^\mathrm{T}\mu_t\, \varphi(\mu_t))_+$

The proposed AMRCs preferably use each new instance-label pair to update classification rules as described in Algorithm 1 and predict the label of an instance as described in Algorithm 2 (referred Algorithm 3 and 4 will be described later):

| Algorithm 1 Learning AMRCs |
| --- |
| Input: $(x_{t-1}, y_{t-1})$, $\hat{\tau}_{t-1}$, $\lambda_{t-1}$, and $\mu_{t-1}$<br>Output: $\tau_t$, $\lambda_t$, $\mu_t$, and $R(U_t)$<br>Update $\hat{\tau}_t$ and $\lambda_t$ using $(x_{t-1}, y_{t-1})$, $\hat{\tau}_{t-1}$, and $\lambda_{t-1}$ (see Alg. 3)<br>Update $\mu_t$ and obtain $R(Ut)$ solving the optimization (3) using $\hat{\tau}_t$, $\lambda_t$, and $\mu_{t-1}$ (see Alg. 4) |

| Algorithm 2 Prediction with AMRCs |
| --- |
| Input: $x_t$ and $\mu_t$<br>Output: $\hat{y}_t$ and $h_t(\hat{y}_t x_t)$<br>for each $y \in Y$ do<br>    Obtain $h_t(y|x_t)$ as described in (7) using the parameter $\mu_t$ obtained at learning<br>Draw $\hat{y}_t$ from distribution $h_t(y|x_t)$ |

The next paragraphs explain the proposed algorithms for tracking uncertainty sets over time, for updating the mean vector estimates $\hat{T}t$ and confidence vector $\lambda_t$ using those vectors at previous time. Optionally the techniques to track uncertainty sets utilize conventional target tracking methods that describe target trajectories using kinematic models.

The following algorithms estimate each component of the mean vector $\tau t$ at each time $t$ from instance-label pairs obtained up to time $t - 1$. For $i = 1, 2, ..., m$, $\tau_{t,i}$ are the $i$-th component of the mean vector and by $\Phi_i(x_t, y_t)$ the $i$-th component of the feature vector corresponding with instance-label pair $(x_t, y_t)$. In addition, it is assumed that $\tau_{t,i}$ is $k$ times differentiable with respect to time and $\eta_{t,i} \in R^{k+1}$ is the vector composed by $\tau_{t,i}$ and its successive derivatives up to order $k$. For target tracking, the evolution of such state vector $\eta t,i$ for $i = 1, 2, ..., m$ is modelled using the partially-observed linear dynamical system

$$\eta_{t,i} = \mathbf{H}_t \eta_{t-1,i} + \mathbf{D}_t \mathbf{w}_{t,i}$$
$$\Phi_i(x_t, y_t) = \tau_{t,i} + v_{t,i} \qquad (13)$$

with transition matrix $Ht$ and noise gain matrix $Dt$ given by

$$\mathbf{H}_t = \mathbf{I} + \sum_{j=1}^{k} \frac{\Delta_t^j}{j!} \mathbf{U}_j, \quad \mathbf{D}_t = \mathrm{diag}\left( \frac{\Delta_t^{k+1}}{(k+1)!}, \frac{\Delta_t^k}{k!}, ..., \Delta_t \right)$$

where $U_j$ is the $(k + 1) \times (k + 1)$ matrix with ones on the $j$-th upper diagonal and zeros in the rest of components, and $\Delta t$ is the time increment at $t$. The variables $w_{t,i}$ and $v_{t,i}$ represent uncorrelated noise processes with mean zero and variance $q^2_{t,i}I$ and $r^2_{t,i}$, respectively. Such models are known as kinematic state models and can be derived using the $k$-th order Taylor expansion of $\tau_{t,i}$.

The result below allows to recursively estimate state vectors $\hat{\eta}_{t,i}$ together with their mean quadratic error matrices $\Sigma_{t,i}$, for $i = 1, 2, ..., m$. Then, the estimated mean vectors $\tau\hat{}_t$ are obtained as the first components of the estimated state vectors, and confidence vectors $\lambda_t$ are taken proportional to the first component of mean quadratic error matrices, that is

$$\hat{\tau}_{t,i} = \mathbf{e}_1^{\mathrm{T}}\widehat{\boldsymbol{\eta}}_{t,i}, \ \lambda_{t,i} = \lambda_0 \sigma_{t,i}, \ \sigma_{t,i} = \sqrt{\mathbf{e}_1^{\mathrm{T}}\widehat{\boldsymbol{\Sigma}}_{t,i}\mathbf{e}_1} \tag{14}$$

for $\lambda_0 > 0$ and i = 1,2, ..., m.

Theorem 3. The state vector $\eta_{t,i}$ is given by the dynamical system in equation (13) for i = 1, 2, ..., m. Then, the linear estimator of $\eta_{t,i}$ based on $(x_1, y_1), (x_2, y_2), ..., (x_{t-1}, y_{t-1})$ that has minimum mean squared error is given by

$$\widehat{\boldsymbol{\eta}}_{t,i} = \mathbf{H}_t \left( \widehat{\boldsymbol{\eta}}_{t-1,i} - \frac{\widehat{\boldsymbol{\Sigma}}_{t-1,i}\mathbf{e}_1}{\sigma_{t-1,i}^2 + r_{t,i}^2} \left( \hat{\tau}_{t-1,i} - \Phi_i(x_{t-1}, y_{t-1}) \right) \right) \tag{15}$$

and its mean quadratic error matrix is given by

$$\widehat{\boldsymbol{\Sigma}}_{t,i} = \mathbf{H}_t \left( \mathbf{I} - \frac{\widehat{\boldsymbol{\Sigma}}_{t-1,i}\mathbf{e}_1}{\sigma_{t-1,i}^2 + r_{t,i}^2} \mathbf{e}_1^{\mathrm{T}} \right) \widehat{\boldsymbol{\Sigma}}_{t-1,i}\mathbf{H}_t^{\mathrm{T}} + q_{t,i}^2 \mathbf{D}_t \tag{16}$$

where $\hat{\eta}_{1,i} = 0$, $\widehat{\boldsymbol{\Sigma}}_{1,i} = \mathbf{H}_1\mathbf{H}_1^{\mathrm{T}} + q_{1,i}^2\mathbf{D}_1$, and i = 1,2, ..., m

The linear estimator with minimum mean squared error for a dynamical system such as equation (13) can be given by the Kalman filter recursions. Then, equations (15) and (16) are obtained after some algebra from the Kalman recursions for predicted state vector and predicted mean quadratic error matrix.

The above theorem enables to track uncertainty sets over time. Specifically, Theorem 3 allows to recursively estimate each component of mean vectors $\tau_t$ as well as their confidence vectors $\lambda_t$. Such estimates are obtained using the equations (14) and the recursions (15) and (16) every time a new instance-label pair is received. As described before herein, increased values of $\lambda_0$ result in tighter instantaneous bounds, while reduced values of $\lambda_0$ result in a lower bound for accumulated mistakes. Algorithm 3 details the proposed procedure to track uncertainty sets over time that has computational complexity $O(mk^3)$ and memory complexity $O(mk^2)$. The variances $q_{t,i}^2$ and $r_{t,i}^2$ of noise processes $w_{t,i}$ and $v_{t,i}$ in equation (13) for i = 1, 2, ..., m can be estimated online using conventional methods.

The proposed techniques account for multivariate and higher order changes in data characteristics since the dynamical systems used model the detailed time evolution of each component in the mean ve $\hat{\eta}_{t,i}$ Specifically, such models keep tra $\hat{\Sigma}_{t,i}$ he mean vector and its derivatives in together their estimated errors in for i = 1, 2, ..., m.

---

Algorithm 3 Estimating mean vectors step

Input: $(x_{t-1}, y_{t-1})$, $\hat{\eta}_{t-1,i}$, $\hat{\Sigma}_{t-1,i}$, $q_{t,i}$ and $r_{t,i}$ for i =1, 2, ..., m
Output: $\tau_t$, $\lambda_t$, $\hat{\eta}_{t,i}$ and $\hat{\Sigma}_{t,i}$ for i = 1, 2, ..., m
for i = 1, 2, ..., m do
    Obtain state vector $\hat{\eta}_{t,i}$ using equation (15)
    Obtain quadratic error matrix $\hat{\Sigma}_{t,i}$ using equation (16)
    Obtain the i-th component of mean vector estimate $\hat{\tau}_{t,i}$ and confidence vector $\lambda_{t,i}$ using (14)

---

After updating step, AMRCs learn classifier parameters $\mu_t$ using those parameters at previous time. Optionally, the method proposes sequential learning algorithms to obtain AMRCs' parameters at each time. The subgradient method SM algorithm can be used for convex optimization problem of equation (3). Then, the present invention proposes efficient algorithms that use a warm start for the SM iterations and maintain a local approximation of the polyhedral function $\phi(\cdot)$ in equation (4).

The SM algorithm applied to optimization (3) obtains parameters $\mu_t$ from updated mean vector estimates $\tau^\wedge_t$ and confidence vectors $\lambda_t$ using the iterations for j = 0, 1, ...

$$\boldsymbol{\mu}_t^{(j+1)} = \boldsymbol{\mu}_t^{(j)} + \alpha \left( \hat{\boldsymbol{\tau}}_t - \partial\varphi(\boldsymbol{\mu}_t^{(j)}) - \left[ \lambda_{t,1}\mathrm{sgn}(\mu_{t,1}^{(j)}), \lambda_{t,2}\mathrm{sgn}(\mu_{t,2}^{(j)}), ..., \lambda_{t,m}\mathrm{sgn}(\mu_{t,m}^{(j)}) \right]^{\mathrm{T}} \right) \quad (17)$$

where $\mu_t^{(j)}$ is the j-th iterate for $\mu_t$, $\alpha$ is the step size, $\partial\phi(\mu_t^{(j)})$ denotes a subgradient of $\phi(\cdot)$ at $\mu_t^{(j)}$, and $\lambda_t$,i and $\mu_{t,i}^{(j)}$ denote each component of $\lambda_t$ and $\mu_t^{(j)}$, respectively, for i = 1, 2, ..., m.

The proposed algorithm reduces the number of SM iterations by using a warm start that initializes the parameters $\mu_t$ in equation (17) with the solution obtained at previous time $\mu_{t-1}$. In addition, the SM iterations are efficiently computed by maintaining a local approximation of polyhedral function $\phi(\cdot)$ in equation (4). Such function is given by the pointwise maximum of linear functions indexed by pairs of instances and labels' subsets x ∈ X, C ⊆ Y. So that, if $\mathcal{I}$ is the set of such pairs:

$$\varphi(\boldsymbol{\mu}) = \max_{x\in\mathcal{X}, \mathcal{C}\subseteq Y} \left( \sum_{y\in\mathcal{C}} \Phi(x,y)^{\mathrm{T}}\boldsymbol{\mu} - 1 \right) / |\mathcal{C}| = \max_{i\in\mathcal{I}} \left\{ \mathbf{f}_i^{\mathrm{T}}\boldsymbol{\mu} - h_i \right\} \quad (18)$$

with

$$\mathbf{f}_i = \left( \sum_{y\in\mathcal{C}} \Phi(x,y) \right) / |\mathcal{C}| \in \mathbb{R}^m \text{ and } h_i = 1/|\mathcal{C}|$$

for the index I that corresponds to pair $(x, \mathcal{C})$.

Local approximations of equation (18) can be used, given by indices corresponding with subgradients of $\phi(\cdot)$. Specifically, if R ⊆ R$^m$ we have that for any $\mu$ ⊆ R

$$\varphi(\boldsymbol{\mu}) = \max_{i\in\mathcal{J}_{\mathcal{R}}} \left\{ \mathbf{f}_i^{\mathrm{T}}\boldsymbol{\mu} - h_i \right\}$$

with

$$\mathcal{J}_{\mathcal{R}} = \{i\in\mathcal{I} : \exists\mu\in\mathcal{R} \text{ with } \varphi(\mu) = \mathbf{f}_i^{\mathrm{T}}\mu - h_i\} = \{i\in\mathcal{I} : \exists\mu\in\mathcal{R} \text{ with } \mathbf{f}_i\in\partial\varphi(\mu)\}$$

Then, if $\mathcal{J}_{\mathcal{R}} = \{i_1, i_2, ..., i_N\}$ for any $\mu \in \mathcal{R}$, $\varphi(\mu) = \max\{F\mu - h\}$ with F = [f$_{i1}$, f$_{i2}$, ..., f$_{iN}$]$^{\mathrm{T}}$ and h = [h$_{i1}$, h$_{i2}$, ... , h$_{iN}$]$^{\mathrm{T}}$,

**Algorithm 4** obtains the classifier parameters $\mu_t$ together with the instantaneous bounds for probabilities of error R(Ut) and has computational complexity O(NK$_m$ + m$^2$) and memory complexity O(N$_m$) where K is the maximum number of SM iterations.

---

**Algorithm 4** Learning step

---

**Input:** $x_{t-1}, \hat{\tau}_t, \lambda_t, \mu_{t-1}, \mathbf{F}$, and $\mathbf{h}$
**Output:** $\mu_t, R(\mathcal{U}_t), \mathbf{F}_{\text{new}}$, and $\mathbf{h}_{\text{new}}$

**for each** $\mathcal{C} \subseteq \mathcal{Y}$ **do**
    $\mathbf{F} \leftarrow \text{concat}(\mathbf{F}, \sum_{y \in \mathcal{C}} \Phi(x_{t-1}, y)/|\mathcal{C}|)$
    $\mathbf{h} \leftarrow \text{concat}(\mathbf{h}, 1/|\mathcal{C}|)$
$\mu_t \leftarrow \mu_{t-1}$
**repeat**
    $\mathbf{f}_i \leftarrow$ row of $\mathbf{F}$ such that $\mathbf{f}_i^{\mathrm{T}}\mu_t - h_i = \max\{\mathbf{F}\mu_t - \mathbf{h}\}$
    $\mu_t \leftarrow \mu_t + \alpha\left(\hat{\tau}_t - \mathbf{f}_i - [\lambda_{t,1}\text{sgn}(\mu_{t,1}), \lambda_{t,2}\text{sgn}(\mu_{t,2}), ..., \lambda_{t,m}\text{sgn}(\mu_{t,m})]^{\mathrm{T}}\right)$
    $\mathbf{F}_{\text{new}} = \text{concat}(\mathbf{F}_{\text{new}}, \mathbf{f}_i)$
    $\mathbf{h}_{\text{new}} = \text{concat}(\mathbf{h}_{\text{new}}, h_i)$
**until** Stopping rule is fulfilled
$R(\mathcal{U}_t) \leftarrow 1 - \hat{\tau}_t^{\mathrm{T}}\mu_t + \max\{\mathbf{F}\mu_t - \mathbf{h}\} + \lambda_t^{\mathrm{T}}|\mu_t|$

---

In summary, the method of Fig. 1 proposes adaptive minimax risk classifiers (AMRCs) based on tightly tracking underlying distributions over time. Specifically, AMRCs sequentially learn classification rules utilizing uncertainty sets that include the underlying distribution with high probability. Techniques that track uncertainty sets accounting for multivariate and higher order changes in data characteristics, and techniques that efficiently update classification rules as new instance-label pairs arrive are also proposed. In addition, AMRCs provide performance guarantees in terms of bounds for accumulated mistakes and also in terms of instantaneous bounds for probabilities of error. Differently from previous techniques for adaptive settings, the proposed methodology can provide performance guarantees using a statistical learning approach and enable to more fully exploit sequential data with characteristics that change over time.

**Claims**

1. Predictive method for energy management that comprises the steps of:

    - using energy-related data to estimate multiple characteristics of the energy-related data at different times, wherein different characteristics of the energy-related data change in a different manner,
    - obtaining predictors at different times by using the estimated characteristics of energy-related data,
    - adapting to the changes of the different characteristics by estimating the evolution of each characteristic over time,
    - using the obtained predictors to forecast the value of energy-related variables, and
    - using the predicted energy-related variables to take energy-related decisions.

2. Predictive method, according to claim 1, wherein the energy-related data are periodically updated at each time t.

3. Predictive method, according to claim 2, wherein multiple characteristics of energy-related data are estimated at time t using the estimated characteristics at previous time t-1 and energy-related data at time t.

4. Predictive method, according to any of the preceding claims, wherein the estimated characteristics are obtained using models that account for multivariate changes in data characteristics.

5. Predictive method, according to any of the claims 2 to 4, wherein the update at time t of each characteristic is carried out accounting for the specific change of that characteristic at time t.

6. Predictive method, according to any of the claims 2 to 5, wherein the predictor at time t is obtained from the estimated characteristics at time t.

7. Predictive method, according to any of the preceding claims, wherein assessments of the accuracy of the estimates of multiple characteristics are obtained at different times.

8.  Predictive method, according to any of the preceding claims, wherein multiple characteristics of energy-related data are estimated at time t using the estimated characteristics at time t-1, energy-related data at time t, and assessments of the accuracy of the estimated characteristics at time t-1.

9.  Predictive method, according to any of the claims 2 to 8, wherein the predictor at time t is obtained from the estimated characteristics at time t together with assessments of the accuracy of the estimated characteristics at time t.

10. Predictive method, according to any of the claims 2 to 9, wherein the values of energy-related variables at time t are estimated using the predictor at time t and energy-related data.

11. Predictive method, according to any of the claims 2 to 10, wherein the energy-related decisions at time t are made based on the predicted energy-related variables at time t.

12. Predictive method, according to claim 1, that uses instances for predicting labels and updates classification rules from real labels as new instance-label pairs are obtained, wherein the method comprises the steps of:

> - obtaining instance-label pairs (x_t,y_t) for multiple times t, wherein such instance-label pairs follow different underlying distributions $p_t$ ,
> - modelling at least a mean vector $T_t$ representing the characteristics of the underlying distribution $p_t$, wherein each component of the mean vector represents a feature of the instance-label pairs $(x_t, y_t)$, being the mean vector defined in each time by the expectation of a feature map $\Phi$,
> - sequentially estimating each of the components of the mean vector $T_t$ independently,
> - determining uncertain sets Ut, from the estimation of the mean vector $T_t$, wherein these uncertain sets Ut comprise the time-varying underlying distribution $p_t$ of data with a high probability, and
> - updating classification rules by solving an optimization problem in each instant of time given an uncertain set Ut.

13. Method, according to claim 12, wherein the estimation of each component of the main vector $T_t$ for an uncertainty sets' tracking is based on Kalman filter recursions, for modelling as a dynamical system the evolution of the components of the mean vector $T_t$., and wherein the optimization problem is solved using a subgradient method (SM) that uses warm starts and maintains local approximations of the objective function.

FIG. 1

## EUROPEAN SEARCH REPORT

**Application Number**

EP 21 38 3216

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG ZHE ET AL: "A Novel Concept Drift Detection Method for Incremental Learning in Nonstationary Environments", IEEE TRANSACTIONS ON NEURAL NETWORKS AND LEARNING SYSTEMS, IEEE, USA, vol. 31, no. 1, 1 January 2020 (2020-01-01), pages 309-320, XP011764410, ISSN: 2162-237X, DOI: 10.1109/TNNLS.2019.2900956 [retrieved on 2020-01-03] * the whole document * ----- | 1-13 | INV. G06N20/00 |
| X | FEKRI MOHAMMAD NAVID ET AL: "Deep learning for load forecasting with smart meter data: Online Adaptive Recurrent Neural Network", APPLIED ENERGY, ELSEVIER SCIENCE PUBLISHERS, GB, vol. 282, 10 November 2020 (2020-11-10), XP086388598, ISSN: 0306-2619, DOI: 10.1016/J.APENERGY.2020.116177 [retrieved on 2020-11-10] * the whole document * ----- | 1-13 | TECHNICAL FIELDS SEARCHED (IPC) G06N |
| A | JOÃO GAMA ET AL: "A Survey on Concept Drift Adaptation", ACM COMPUTING SURVEYS., vol. 1, no. 1, 31 January 2013 (2013-01-31), pages 1-44, XP055782959, US ISSN: 0360-0300, DOI: 10.1145/2523813 * the whole document * ----- | 1-13 | |

-/--

The present search report has been drawn up for all claims

| Place of search | Date of completion of the search | Examiner |
|---|---|---|
| The Hague | 20 July 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 38 3216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SANTIAGO MAZUELAS ET AL: "Minimax Classification with 0-1 Loss and Performance Guarantees", ARXIV.ORG, CORNELL UNIVERSITY LIBRARY, 201 OLIN LIBRARY CORNELL UNIVERSITY ITHACA, NY 14853, 15 October 2020 (2020-10-15), XP081953641, * the whole document * ----- | 1-13 | |
| T | VERONICA ALVAREZ ET AL: "Minimax Classification under Concept Drift with Multidimensional Adaptation and Performance Guarantees", ARXIV.ORG, CORNELL UNIVERSITY LIBRARY, 201 OLIN LIBRARY CORNELL UNIVERSITY ITHACA, NY 14853, 31 May 2022 (2022-05-31), XP091236040, * the whole document * ----- | | |

TECHNICAL FIELDS
SEARCHED      (IPC)

The present search report has been drawn up for all claims

| Place of search | Date of completion of the search | Examiner |
|---|---|---|
| The Hague | 20 July 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6577962 B1

**Non-patent literature cited in the description**

- **GEOFFREY I. WEBB ; LOONG KUAN LEE ; BART GOETHALS ; FRANÇOIS. PETITJEAN.** Analyzing concept drift and shift from sample data. *Data Mining and Knowledge Discovery,* September 2018
- **SARAH JANE DELANY ; PÁDRAIG CUNNINGHAM ; ALEXEY TSYMBAL ; LORCAN COYLE.** A case-based technique for tracking concept drift in spam filtering. *Knowledge-Based Systems,* 2005

- Mining concept-drifting data streams using ensemble classifiers. *Proceedings of the ninth ACM SIGKDD International Conference on Knowledge Discovery and Data Mining,* 2003